# EUROPEAN PATENT APPLICATION

(11) **EP 4 455 098 A1**
(43) Date of publication of application: **30.10.2024**
(21) Application number: 23756573.4
(22) Date of filing: 10.02.2023
(51) Int. Cl.: C02F 3/10, C02F 3/00, C02F 3/12

(54) **APPARATUS AND METHOD FOR ACCELERATING SLUDGE GRANULATION**

(30) Priority: 17.02.2022 KR 20220020766; 17.02.2022 KR 20220020772
(71) Applicant: BKT Co., Ltd., Daejeon 34109 (KR)
(72) Inventor: LEE, Jeong Jun, Daejeon 34053 (KR); HWANG, Ho Jae, Sejong 30145 (KR); JANG, Jae Gwan, Daejeon 35402 (KR)
(74) Representative: Sander, Rolf
(86) International application number: PCT/KR2023/001971
(87) International publication number: WO 2023/158160

(57) **Abstract**

Disclosed herein are an apparatus and method for accelerating sludge granulation. The apparatus for accelerating sludge granulation, which serves to accelerate a process of granulating activated sludge to produce granules, includes a cultivation tank configured to receive activated sludge and a carbon source to culture them in a preset environment for a preset time, an acceleration reactor configured to receive the activated sludge cultured in the cultivation tank and sewage from the outside to grow and granulate the activated sludge, and a control unit configured to control operations of the cultivation tank and the acceleration reactor.

## Description

### CROSS-REFERENCE TO RELATED APPLICATION

This application is a continuation of International Application No. PCT/KR2023/001971 filed on February 10, 2023, which claims priority to Korean Patent Application Nos. 10-2022-0020766 and 10-2022-0020772, filed on February 17, 2022, the entire contents of which are herein incorporated by reference.

### Technical Field

The present disclosure relates to an apparatus and method for accelerating the granulation of sludge.

### Background Art

This section merely provides background information related to the present disclosure that is not necessarily prior art.

Much research has been conducted on advancement and improvement in performance of sewage treatment as a demand is increasing for sufficient sewage treatment and collection with urban expansion and population growth and as strict regulations on the quality of water emerge in developed countries. The quality of sewage discharged into public waters is currently improving every year owing to the spread of sewage treatment systems, but nutrients such as nitrogen or phosphorus are still increasing in concentration to cause red tide and eutrophication, which may become a major social issue.

To solve this issue, an activated sludge process is commonly used in biological treatment facilities for wastewater. The activated sludge process uses suspended microorganisms to remove contaminants contained in sewage. However, the activated sludge process makes it difficult to optimize the dominance of microorganisms corresponding to the conditions of each unit, resulting in low efficiency in the removal of contaminants, due to the continuous movement of suspended sludge to each tank. Moreover, the activated sludge process has several problems with solid-liquid separation and treatment efficiency, such as frequent bulking and foaming depending on the characteristics of influent and the operating method thereof.

In order to solve the problems of the conventional activated sludge process, a wastewater treatment method has been proposed that treats sewage by granulating suspended sludge instead of using suspended microorganisms. By granulating sludge to produce granules, the granules are used in order to treat contaminants in sewage while solving the problems of the activated sludge process described above.

This method of sewage treatment using granules, however, has a problem that it takes a considerable period of time to granulate sludge to produce granules. In conventional methods, it takes at least 3 months or more to form sludge into granules. Since it takes quite a long period of time as described above, it was difficult to completely solve the problems of the activated sludge process in a short period of time even with the conventional methods.

This affects a treatment capacity of a sewage treatment system. The capacity of the sewage treatment system can be increased by increasing the amount that can be treated at one time or by increasing the number of treatments by speeding up the treatment speed. However, it is difficult to increase the amount that is treated at one time because it requires more physical space such as the site. Accordingly, the most efficient way to increase the treatment capacity of the sewage treatment system is to accelerate the treatment speed, thereby increasing the number of treatment cycles per unit period. However, since it takes quite a long period of time in the conventional methods as described above, the conventional sewage treatment system has a relatively small treatment capacity.

### SUMMARY

### Technical Problem

An embodiment of the present disclosure has an object to provide an apparatus and method for accelerating the granulation of sludge, which are capable of accelerating granulation of sludge to shorten the settling time of granules.

Also, an embodiment of the present disclosure has an object to provide a sewage treatment system and method that increase a sewage treatment capacity by accelerating granulation of sludge to shorten the settling time of granules.

### Technical Solution

According to an aspect of the present disclosure, there is provided an apparatus for accelerating sludge granulation, which serves to accelerate a process of granulating activated sludge to produce granules. The apparatus includes a cultivation tank configured to receive activated sludge and a carbon source to culture them in a preset environment for a preset time, an acceleration reactor configured to receive the activated sludge cultured in the cultivation tank and sewage from the outside to grow and granulate the activated sludge, and a control unit configured to control operations of the cultivation tank and the acceleration reactor.

According to an aspect of the present disclosure, the preset environment may be an anaerobic environment.

According to an aspect of the present disclosure, the preset time may be 3 to 5 days.

According to an aspect of the present disclosure, the acceleration reactor may include an inflow port for receiving the activated sludge cultured in the cultivation tank and the sewage from the outside, an aeration part configured to stir the introduced activated sludge and sewage, a shear force formation part configured to generate shear force in the activated sludge stirred by the aeration part, and an outflow port for discharging supernatant after the reaction in the acceleration reactor is completed.

According to an aspect of the present disclosure, the shear force formation part may include an inlet formed at the bottom thereof for introducing air supplied from the aeration part thereinto, a release port formed at one point thereof for releasing the stirred activated sludge from the inside to the outside thereof, and an outlet formed at the top thereof for discharging the stirred activated sludge to the outside.

According to an aspect of the present disclosure, the control unit may control the acceleration reactor to receive the sewage for a first preset time to aerate it for a second preset time, to precipitate the sludge for a third preset time, and to rest for a fourth preset time.

According to an aspect of the present disclosure, the control unit may control the acceleration reactor to operate repeatedly in a cycle.

According to another aspect of the present disclosure, there is provided an apparatus for accelerating sludge granulation, which serves to accelerate a process of granulating activated sludge to produce granules. The apparatus includes an acceleration reactor configured to receive activated sludge and a carbon source to culture them in a preset environment for a preset time and to receive sewage from the outside to grow and granulate the cultured activated sludge, and a control unit configured to control an operation of the acceleration reactor.

According to another aspect of the present disclosure, the control unit may operate the acceleration reactor until the sludge is formed into granules.

According to another aspect of the present disclosure, the control unit may determine whether the sludge is formed into the granules based on whether the sludge satisfies preset criteria in size and sedimentation.

According to a further aspect of the present disclosure, there is provided a method of accelerating a process of granulating activated sludge to produce granules by an apparatus for accelerating sludge granulation, which includes a culture process of receiving activated sludge and a carbon source to culture them in a preset environment for a preset time, an aeration process of receiving sewage from the outside to aerate the activated sludge cultured in the culture process for a first preset time, a sedimentation process of settling the sludge for a second preset time, and a resting process of pausing for a third preset time.

### Advantageous Effects

As described above, according to an aspect of the present disclosure, there is an advantage of accelerating the granulation of sludge to reduce the settling time of granules.

Furthermore, according to another aspect of the present disclosure, there is an advantage of increasing a sewage treatment capacity by accelerating the granulation of sludge to shorten the settling time of granules.

### Brief Description of Drawings

FIG. 1 is a block diagram illustrating a configuration of a sewage treatment system according to a first embodiment of the present disclosure.
FIGS. 2A and 2B are block diagrams illustrating a configuration of an apparatus for accelerating sludge granulation according to the embodiment of the present disclosure.
FIG. 3 is a diagram illustrating a configuration of an acceleration reactor according to the embodiment of the present disclosure.
FIGS. 4A, 4B, and 4C are diagrams illustrating an operation of the acceleration reactor according to the embodiment of the present disclosure.
FIGS. 5A and 5B are diagrams illustrating a state of the cultivation tank according to an embodiment of the present invention when organic matter is not added and when it is added to the cultivation tank.
FIGS. 6A, 6B, and 6C illustrate a comparison of sedimentation of sludge when it is cultured and when it is not cultured in the apparatus for accelerating sludge granulation according to the embodiment of the present disclosure.
FIG. 7 is a flowchart illustrating a method of accelerating granulation of activated sludge by the apparatus for accelerating sludge granulation according to the embodiment of the present disclosure.
FIG. 8 is a flowchart illustrating a method of treating nutrients in sewage by the sewage treatment system according to the embodiment of the present disclosure.
FIG. 9 is a graph illustrating sedimentation of activated sludge cultured in the cultivation tank for a preset period of time and for another period of time according to the embodiment of the present disclosure.
FIG. 10 is a graph illustrating sedimentation of activated sludge when it is grown by the apparatus for accelerating sludge granulation and when it is grown by another process according to the embodiment of the present disclosure.
FIG. 11 is a block diagram illustrating a configuration of a sewage treatment system according to a second embodiment of the present disclosure.

### Detailed Description

Specific embodiments will be described in detail below with reference to the accompanying drawings since the present disclosure may be subjected to various modifications and have various examples. It should be understood, however, that the present disclosure is not intended to be limited to the specific embodiments, but the present disclosure includes all modifications, equivalents or replacements that fall within the spirit and scope of the disclosure as defined in the following claims. Throughout the disclosure, like reference numerals refer to like elements throughout the various figures.

The terms such as "first", "second", "A", and/or "B" may be used herein to describe various elements of the present disclosure, but these elements should not be construed as being limited by the terms. These terms will be used only for the purpose of differentiating one element from other elements of the present disclosure. For example, without departing from the scope and spirit of the present disclosure, a first element may be referred to as a second element, and, similarly, a second element may also be referred to as a first element. As used herein, the term "and/or" includes any and all combinations of one or more of the associated listed items.

It will be understood that when an element is referred to as being "coupled" or "connected" to another element, it can be directly coupled or connected to the other element or intervening elements may also be present. On the other hand, it will be understood that when an element is referred to as being "directly coupled" or "directly connected" to another element, there are no intervening elements present.

The terminology used herein is for the purpose of describing particular embodiments only, and is not intended to limit the present disclosure. As used herein, the singular forms "a", "an" and "the" are intended to include the plural forms as well, unless the context clearly indicates otherwise. It should be understood that the terms "comprises/includes/has" and/or "comprising/including/having" when used in this specification, specify the presence of stated features, integers, steps, operations, elements, components, and/or groups thereof, but do not preclude the presence or addition of one or more other features, integers, steps, operations, elements, components, and/or groups thereof.

Unless otherwise defined, all terms used herein, including technical and scientific terms, have the same meanings as those commonly understood by one of ordinary skill in the art.

It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In addition, each configuration, procedure, process, method, or the like included in each embodiment of the present disclosure may be shared to the extent that they are not technically contradictory to each other.

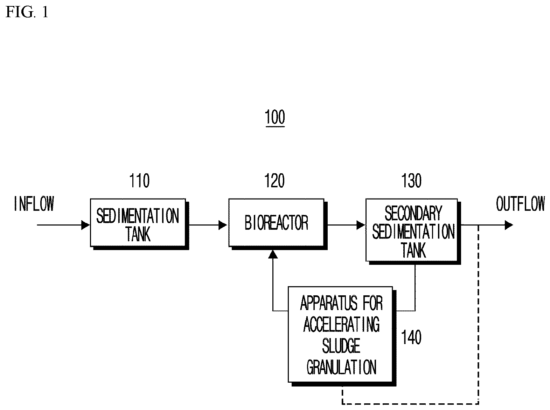

FIG. 1 is a block diagram illustrating a configuration of a sewage treatment system according to a first embodiment of the present disclosure.

Referring to FIG. 1, the sewage treatment system, which is designated by reference numeral 100, according to the first embodiment of the present disclosure includes a sedimentation tank 110, a bioreactor 120, a secondary sedimentation tank 130, an apparatus for accelerating sludge granulation 140, and a control unit (not shown). The control unit may include one or more processors and one or more memory modules storing programs to be executed by the one or more processors.

The sewage treatment system 100 uses activated sludge or granules to remove contaminants in sewage, for example, nutrients such as nitrogen or phosphorus. Meanwhile, it includes the apparatus for accelerating sludge granulation 140, thereby dramatically improving the granulation of activated sludge or the rate of production of granules. Accordingly, the sewage treatment system 100 may significantly increase the settling velocity of activated sludge or granules that have undergone biological treatment, so as to thereby increase the number of sewage treatments per unit period and an improvement in treatment capacity as well.

The sedimentation tank 110 receives sewage and sediments impurities or solids in the sewage. The sedimentation tank 110 first receives the incoming sewage and settles impurities and solids. The effluent from the sedimentation tank 110 from which impurities and solids have been filtered, flows into the bioreactor 120.

The bioreactor 120 uses activated sludge to remove nutrients such as phosphorus and nitrogen contained in sewage.

The bioreactor 120 uses activated sludge to release phosphorus components in sewage. The bioreactor 120 creates an anaerobic environment to release phosphorus in sewage using some of the activated sludge present in the bioreactor 120. Thus, (some) of the activated sludge in the bioreactor 120 has a state in which organic matter may be primarily accumulated in the cell.

The bioreactor 120 uses activated sludge to remove the released phosphorus and oxidizes ammonia nitrogen to nitrate nitrogen. After using activated sludge to release phosphorus in sewage, the bioreactor 120 allows microorganisms to perform biological treatment using nutrients in an environment with oxygen supplied. Some activated sludge in the bioreactor 120 absorbs phosphorus present in sewage to accumulate energy by converting ADP into ATP. In this case, since the activated sludge accumulates a much larger amount of phosphorus in an aerobic environment than the amount released in an anaerobic environment, the phosphorus in sewage may be removed as a whole. Meanwhile, some other activated sludge in the bioreactor 120 oxidizes ammonia nitrogen to nitrate nitrogen. Thus, the released phosphorus is removed and the ammonia nitrogen is oxidized to nitrate nitrogen.

The bioreactor 120 then uses activated sludge to denitrify the remaining nitrogen components in sewage. The bioreactor 120 creates an anoxic environment and denitrifies the oxidized nitrate nitrogen into nitrogen gas using activated sludge.

The bioreactor 120 may include, for example, an anaerobic tank, an aerobic tank, and an anoxic tank to perform each of the operations described above.

The secondary sedimentation tank 130 receives the sewage that has passed through the bioreactor 120, settles the remaining microorganisms (activated sludge) in the sewage and discharges the supernatant. The bioreactor 120 allows the microorganisms utilized within in it to settle, while only discharging the supernatant. Nevertheless, a significant amount of microorganisms may still be present in the effluent from the bioreactor 120. Microorganisms in the sewage discharged from the bioreactor 120 are settled in the secondary sedimentation tank 130 and then returned them back to the bioreactor 120, thereby preventing the outflow of the microorganisms. The secondary sedimentation tank 130 settles microorganisms and discharges supernatant. Since the supernatant has its nutrients removed, it may be discharged directly or may undergo a post-treatment process before being discharged.

However, in order to complete the operation in the bioreactor 120, the sedimentation of microorganisms is essential. In this case, if the microorganisms (activated sludge) are granulated or formed into granules, the sedimentation time can be significantly reduced, leading to a considerable decrease in treatment time. For this purpose, the sewage treatment system 100 further includes the apparatus for accelerating sludge granulation 140.

The apparatus for accelerating sludge granulation 140 receives some or all of the effluent from the secondary sedimentation tank 130 to accelerate the granulation of activated sludge. The amount of sewage discharged from the secondary sedimentation tank 130 may vary with the degree of granulation of the activated sludge or the capacity of the apparatus for accelerating sludge granulation 140. The secondary sedimentation tank 130 may retain some of the sewage introduced thereinto to allow for the sedimentation of microorganisms, and may release the remainder into the apparatus for accelerating sludge granulation 140. If the secondary sedimentation tank 130 and the apparatus for accelerating sludge granulation 140 have a similar capacity, the entire amount of sewage may also be discharged to the apparatus for accelerating sludge granulation 140 for sedimentation of microorganisms.

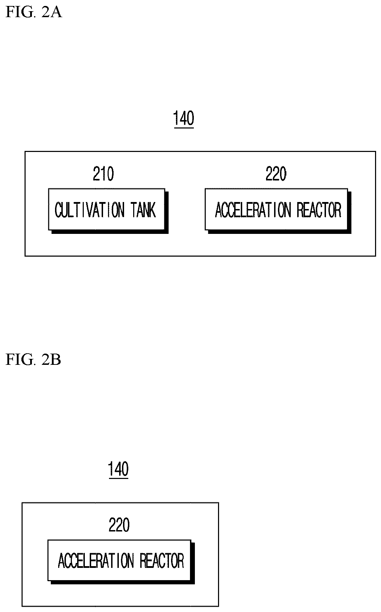

The apparatus for accelerating sludge granulation 140 may accelerate the granulation of activated sludge by creating a preset environment to induce the release of extracellular polymeric substances (EPS) from the activated sludge (microorganisms) and continuously applying shear force at the same time as the growth of microorganisms. The apparatus for accelerating sludge granulation 140 may reduce the time consumed in the conventional process of activated sludge granulation by 1/3 or less, thereby significantly reducing the sedimentation time of microorganisms in the bioreactor 120. The apparatus for accelerating sludge granulation 140 granulates activated sludge to return the granulated activated sludge or granules to the bioreactor 120 and discharge the treated supernatant. The configuration of the apparatus for accelerating sludge granulation will be described later with reference to FIGS. 2 to 4.

The control unit (not shown) controls the operation of each component. The control unit (not shown) controls each of the components 120 to 140 so that the components 120 to 140 perform the above-mentioned operations.

The control unit (not shown) adjusts the amount of sewage discharged from the secondary sedimentation tank 130 to the apparatus for accelerating sludge granulation 140 or the duration the sewage retention in the apparatus for accelerating sludge granulation 140, depending on the degree of granulation of activated sludge, the capacity of the apparatus for accelerating sludge granulation 140, or the amount of nutrients in the incoming sewage. If the activated sludge is sufficiently granulated or formed into granules while going through the apparatus for accelerating sludge granulation 140 multiple times or for a long period of time, it may ensure sufficient speed in the secondary sedimentation tank 130 without having to additionally go through the apparatus for accelerating sludge granulation 140. In addition, even if rapid sewage treatment is not required because nutrients in the introduced sewage are contained in an amount equal to or less than a preset criterion, it may not be necessary to additionally go through the apparatus for accelerating sludge granulation 140. In this situation, the control unit (not shown) may control no sewage to be discharged from the secondary sedimentation tank 130 to the apparatus for accelerating sludge granulation 140, or may control the apparatus for accelerating sludge granulation 140, which receives sewage, to store the sewage for a sufficient time to form activated sludge into granules.

On the other hand, if the amount of nutrients in the introduced sewage increases in a situation where the activated sludge is not sufficiently granulated, the activated sludge granulated to an appropriate level needs to be quickly returned to the bioreactor 120. Accordingly, the control unit (not shown) controls a sufficient amount of sewage or the entire amount of sewage that can be accommodated by the apparatus for accelerating sludge granulation 140 to be delivered from the secondary sedimentation tank 130 to the apparatus for accelerating sludge granulation 140. In addition, the control unit (not shown) controls the apparatus for accelerating sludge granulation 140, which receives sewage, to granulate an appropriate amount of activated sludge and then return the granulated activated sludge to the bioreactor 120. Accordingly, the control unit (not shown) controls nutrients to be quickly removed even when the amount of nutrients increases.

FIGS. 2A and 2B are block diagrams illustrating the configuration of the apparatus for accelerating sludge granulation according to the embodiment of the present disclosure.

Referring to FIG. 2A, the apparatus for accelerating sludge granulation 140 according to the embodiment of the present disclosure includes a cultivation tank 210 and an acceleration reactor 220.

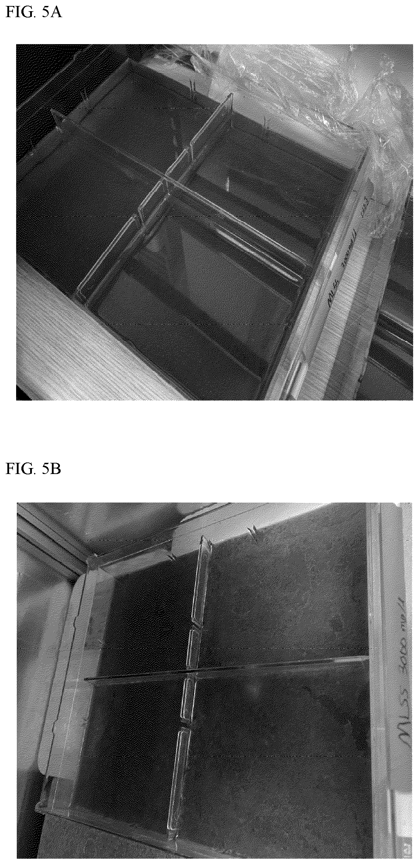

The cultivation tank 210 preferentially cultures activated sludge in a preset environment. The cultivation tank 210 has an anaerobic environment and receives organic matter as a carbon source together with activated sludge to be granulated. The introduced carbon source (organic matter) includes methanol, glycerin, glucose, acetate, or the like. When an external carbon source is supplied in an aerobic environment, activated sludge performs biological treatment on the carbon source. On the other hand, when the carbon source is excessively supplied as activated sludge in an anaerobic environment, the activated sludge releases extracellular polymeric substances (EPS). Thus, the cultivation tank 210 creates an anaerobic environment by injecting a carbon source so that the activated sludge releases extracellular polymeric substances. The cultivation tank 210 cultures activated sludge for about 3 to 5 days in a preset environment. The activated sludge cultured in the cultivation tank 210 releases extracellular polymeric substances. This is illustrated in FIGS. 5A and 5B.

FIGS. 5A and 5B are diagrams illustrating a state of the cultivation tank according to the embodiment of the present invention when organic matter is not added into and when it is added into the cultivation tank.

Referring to FIG. 5A, it can be seen that, when no organic matter is separately introduced into the cultivation tank, extracellular polymeric substances are not released from the activated sludge.

On the other hand, referring to FIG. 5B, it can be seen that, when a preset environment is provided in the cultivation tank and organic matter is introduced thereinto, extracellular polymeric substances are released from the activated sludge.

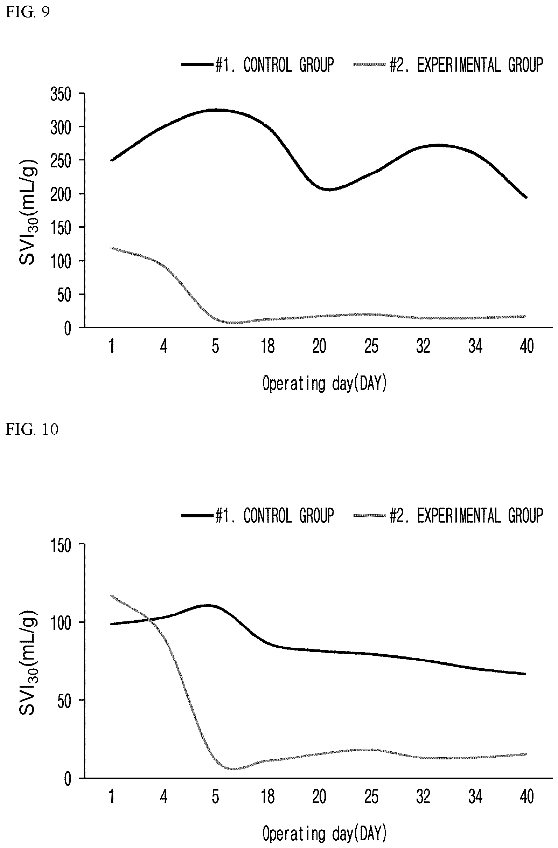

Referring again to FIG. 2A, the cultivation tank 210 performs stationary culture without separate stirring, or performs stirring at a preset speed or less. The cultivation tank 210 cultures activated sludge in a preset environment for about 3 to 5 days, and then delivers the cultured activated sludge to the acceleration reactor 220. As the activated sludge is stationarily cultured for about 3 to 5 days or is stirred at a preset speed or less in the cultivation tank 210, the settling properties of the activated sludge may be significantly enhanced while going through a process to be described later. The data to support this is illustrated in FIG. 9.

FIG. 9 is a graph illustrating the sedimentation of activated sludge cultured in the cultivation tank for a preset period of time and for another period of time according to the embodiment of the present disclosure.

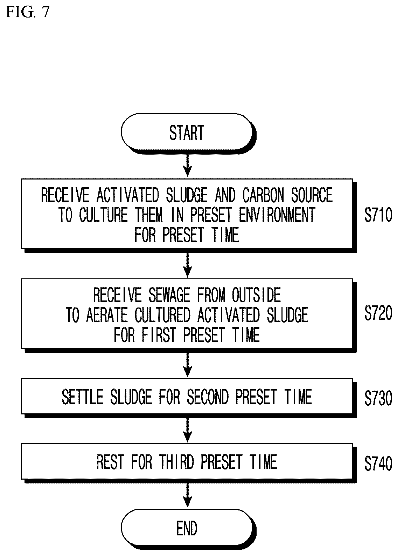

The experimental group refers to activated sludge cultured for a preset period of time (3 to 5 days). FIG. 9 illustrates the sedimentation of activated sludge in the experimental group over time. When the activated sludge cultured for a preset period of time (3 to 5 days) in the cultivation tank 210 is granulated through the acceleration reactor 220 to be described later, it can be seen that the activated sludge has significantly improved settling properties after 5 days of culture. The sludge volume index (SVI) is an index indicative of the settling properties of sludge. The smaller the SVI, the better the settling characteristics of the sludge. It can be seen that the activated sludge (in the experimental group in FIG. 7) cultured for a preset period of time has a significant decreased SVI after that period of time (5 days in FIG. 7).

On the other hand, the control group refers to activated sludge cultured for more than the preset period of time (5 days). FIG. 9 also illustrates the settling properties of activated sludge in the control group over time. It can be seen that the time taken for the control group activated sludge to increase its settling properties was about 4 times longer than that of the experimental group. In addition, it can be seen that the degree of improvement in settling properties of activated sludge (the extent to which the SVI decreases) or the final settling properties of activated sludge in the control group is significantly less than that in the experimental group.

Referring again to FIG. 2A, the acceleration reactor 220 receives activated sludge cultured in the cultivation tank 210 to grow the activated sludge and improve the settling properties thereof. When the activated sludge cultured in the cultivation tank 210 flows into the acceleration reactor 220, the granulation of the activated sludge is accelerated by the released extracellular polymeric substances and the shear force applied to the activated sludge in the acceleration reactor 220. The acceleration reactor 220 receives the cultured activated sludge, and then receives sewage to grow and granulate the activated sludge.

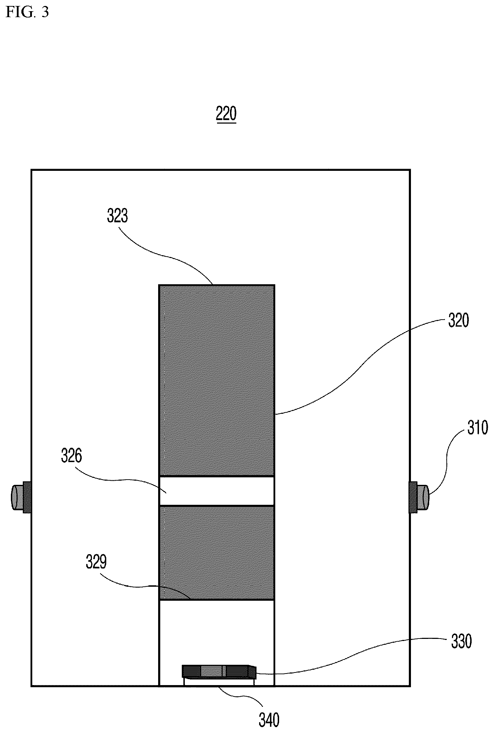

The structure of the acceleration reactor 220 is illustrated in FIG. 3.

FIG. 3 is a diagram illustrating the configuration of the acceleration reactor according to the embodiment of the present disclosure.

Referring to FIG. 3, the acceleration reactor 220 according to the embodiment of the present disclosure includes an outlet 310, a shear force formation part 320, an aeration part 330, and an inlet 340.

The outlet 310 discharges the supernatant after the reaction is completed within the acceleration reactor 220. The outlet 310 is formed at a preset height or more in the reactor 220, which may allow only supernatant to be discharged except the activated sludge that is sedimented and granulated.

The shear force formation part 320 generates shear force in the activated sludge stirred by the aeration part 330. The shear force formation part 320 includes an inlet 329 formed at the bottom thereof for introducing air supplied from the aeration part 330 thereinto, a release port 326 formed at one point thereof, for example, near the center in the height direction thereof for releasing the stirred activated sludge from the inside to the outside thereof, and an outlet 323 formed at the top thereof for discharging the stirred activated sludge to the outside. The release port 326 is implemented to be open in all directions at one point of the shear force formation part 320, which may allow the activated sludge released through the release port 326 to be subjected to shear force. In addition, the activated sludge, which is stirred by the aeration part 330, introduced through the inlet 329, and discharged through the outlet 323, is also subjected to shear force during discharge from the outlet 323.

The aeration part 330 stirs the activated sludge introduced into the reactor 220 to pass through the shear force formation part 320. The aeration part 330 stirs activated sludge, which allows the activated sludge to be introduced through the inlet 329 of the shear force formation part 320 and discharged through the release port 326 or the outlet 323. The activated sludge is discharged through the release port 326 or the outlet 323 by the aeration part 330 and is subjected to shear force. As the activated sludge from which extracellular polymeric substances are released is subjected to shear force, the granulation of activated sludge may be accelerated.

Inlet 340 receives the cultured activated sludge from the cultivation tank 210 and the sewage for the growth of activated sludge from the outside into the reactor 220, or it returns settled activated sludge or granules to the outside (bioreactor).

Referring again to FIG. 2A, the control unit (not shown) controls the operations of the cultivation tank 210 and the acceleration reactor 220.

When activated sludge and a carbon source are supplied to the cultivation tank 210, the control unit (not shown) cultures the activated sludge for a preset period of time (3 to 5 days) and then injects it into the acceleration reactor 220. As described above, when the activated sludge is preferentially cultured in the cultivation tank 210 and then grown in the acceleration reactor 220, it can result in the significant increase in settling properties and shortening the time to rise in settling properties compared to other cases. FIG. 10 illustrates a difference in sedimentation between the preferential culture followed by the acceleration reaction and the culture during the acceleration reaction.

FIG. 10 is a graph illustrating the sedimentation of activated sludge when it is grown by the apparatus for accelerating sludge granulation and when it is grown by another process according to the embodiment of the present disclosure.

The experimental group refers to activated sludge that is preferentially cultured in the cultivation tank 210 and then grown in the acceleration reactor according to the embodiment of the present disclosure. FIG. 10 illustrates the settling properties of activated sludge in the experimental group over time. It can be seen from data in the experimental group that the settling properties have improved at a significant rate after progress of growth (decrease in SVI value) and significantly improved after 5 days. In addition, it can be seen that the settling properties have increased by about 90% (based on the SVI value) compared to the first time.

On the other hand, the control group refers to activated sludge that is cultured during the acceleration reaction as the acceleration reaction is preferentially performed. FIG. 10 also illustrates the settling properties of activated sludge in the control group over time. The control group is identical to the experimental group in that the carbon source is provided during the culture, with the sole exception that the culture proceeds during the acceleration reaction. Here, it can be seen from data in the control group that the settling properties is gradually increased after 5 days, but the extent of increase in the settling properties (in the range of about 10 to 20% based on the SVI value) is insignificant.

As such, when the activated sludge is preferentially cultured in the cultivation tank 210, as described above, the activated sludge may be granulated with high efficiency and in a short time to improve the settling properties thereof as described above.

Referring again to FIG. 2A, the control unit (not shown) operates the acceleration reactor 220 to grow the activated sludge injected into the acceleration reactor 220. The control unit (not shown) controls the reactor 220 to repeat inflow, aerobic, sedimentation, outflow, and rest processes, thereby growing the activated sludge in the reactor 220.

The control unit (not shown) causes sewage to flow into the reactor 220 from the outside. In order for the activated sludge to grow while biologically treating contaminants contained in sewage, the control unit (not shown) may cause the sewage to flow into the reactor 220. The control unit (not shown) may introduce sewage into the reactor 220 within about an hour.

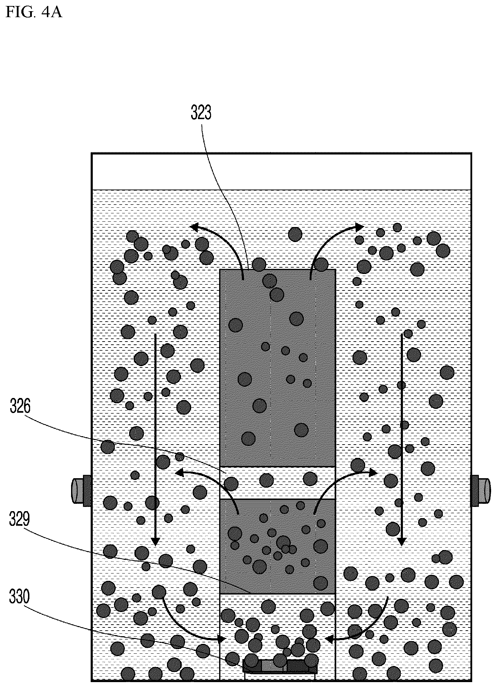

When the sewage is introduced into the reactor 220, the control unit (not shown) controls the progress of aeration in the reactor 220. The aeration proceeds as illustrated in FIG. 4A.

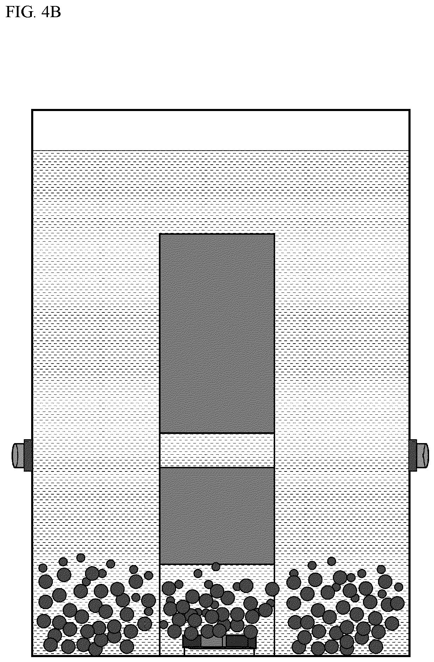

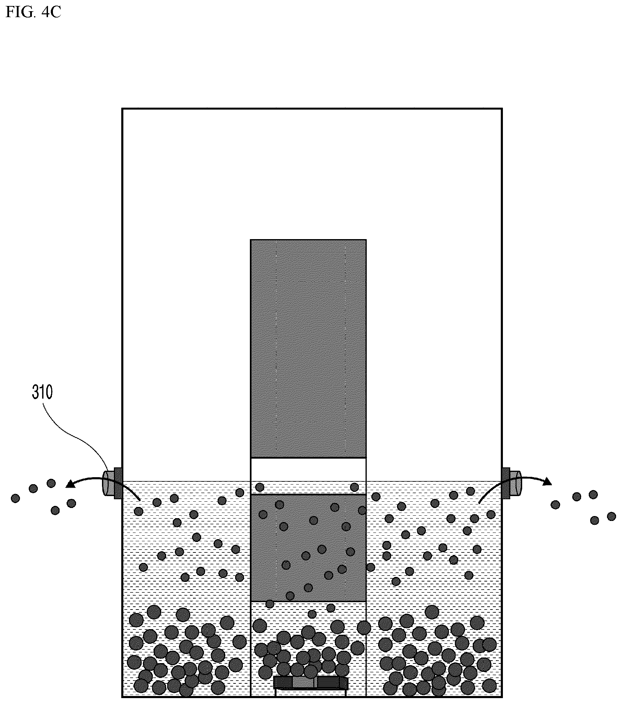

FIGS. 4A, 4B, and 4C are diagrams illustrating the operation of the acceleration reactor according to the embodiment of the present disclosure.

Referring to FIG. 4A, the control unit (not shown) controls the aeration part 330 to stir activated sludge, thereby carrying out the aerobic process in the reactor 220. As the aeration proceeds, the activated sludge grows while biologically treating contaminants in sewage, and the granulation thereof is accelerated by applying shear force thereto.

This control unit (not shown) controls aeration to proceed by the aeration part 330 for about 2 to 4 hours.

Referring again to FIG. 2A, when the aeration has been conducted for a sufficient time, the control unit (not shown) may stop the aeration to allow the stirred activated sludge to settle, and after settling, the activated sludge can be granulated through a rest period. This process proceeds as illustrated in FIGS. 4B and 4C.

Referring to FIGS. 4B and 4C, after the aeration has proceeded for the above-mentioned time, the control unit (not shown) stops the aeration to allow the activated sludge to settle. The settling can proceed in about 15 minutes. After settling, the control unit (not shown) proceeds with a rest period while discharging supernatant. The rest period may proceed for about 45 minutes.

The control unit (not shown) may control the acceleration reactor 220 in this way to be operated in one cycle. One cycle takes about 4 to 6 hours, and the control unit (not shown) controls the reactor 220 to perform it repeatedly.

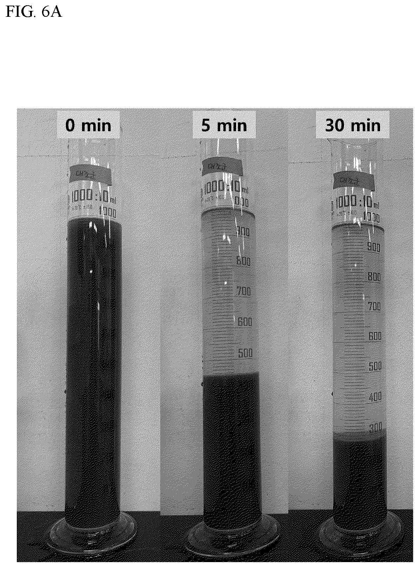

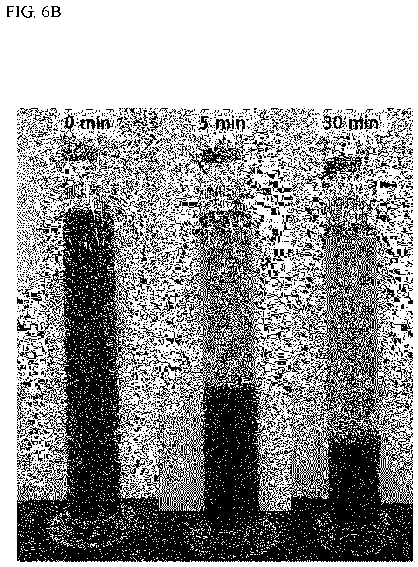

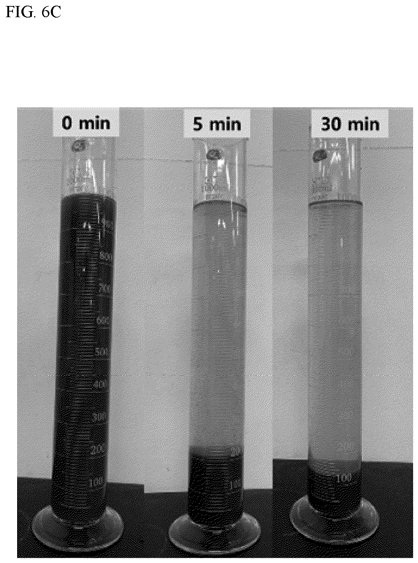

When the apparatus for accelerating sludge granulation 140 grows and granulates the activated sludge, cultured in the cultivation tank 210, in the acceleration reactor 220, the improvement in settling properties can be observed as shown in FIGS. 6A, 6B, and 6C.

FIGS. 6A, 6B, and 6C illustrates a comparison of the sedimentation of sludge when it is cultured and when it is not cultured in the apparatus for accelerating sludge granulation according to the embodiment of the present disclosure.

FIG. 6A illustrates a sedimentation state of untreated activated sludge at the initial time, 5 minutes later, and 30 minutes later. FIG. 6B illustrates a sedimentation state of the activated sludge cultured in the cultivation tank or aerated only in the acceleration reactor 220 at the initial time, 5 minutes later, and 30 minutes later. FIG. 6C illustrates a sedimentation state of the activated sludge that has gone through both the cultivation tank 210 and the acceleration reactor 220 at the initial time, 5 minutes later, and 30 minutes later according to the embodiment of the present disclosure.

Referring to FIGS. 6A and 6B, it can be seen that untreated activated sludge or activated sludge treated only in either the cultivation tank 210 or the acceleration reactor 220 exhibits similar settling properties. In more specific values, the sludge volume index (SVI) in each situation is as follows.

| | | Untreated Activated sludge | Activated sludge having gone through only cultivation tank | Activated sludge having gone through only acceleration reactor |
|---|---|---|---|---|
| SVI₅ | Seeding stage | 135.9 | 135.9 | 135.9 |
| | After 5 days | 115.4 | 112.6 | 111.8 |
| SVI₃₀ | Seeding stage | 58.9 | 58.9 | 58.9 |
| | After 5 days | 71.8 | 73.3 | 73.1 |

In SVI₅ and SVI₃₀, it can be seen that the SVI value of the untreated activated sludge is similar to that of the activated sludge treated only in either the cultivation tank 210 or the acceleration reactor 220.

On the other hand, referring to FIG. 6C, it can be seen that the settling properties of the activated sludge that has gone through both the cultivation tank 210 and the acceleration reactor 220 is significantly improved compared to that of untreated activated sludge or activated sludge treated only in either the cultivation tank or the acceleration reactor. In more specific values, the SVI in that situation is as follows.

| | | Activated sludge having gone through both cultivation tank and acceleration reactor |
|---|---|---|
| SVI₅ | Seeding stage | 135.9 |
| | After 5 days | 48.8 |
| SVI₃₀ | Seeding stage | 58.9 |
| | After 5 days | 30.2 |

It can be seen that the SVI in that situation is smaller (improved) by about 60% compared to the SVI in other situations.

Referring again to FIG. 2A, the control unit (not shown) continuously operates the acceleration reactor 220 and checks whether the sludge is granulated and grows into granules. The control unit (not shown) continuously operates the acceleration reactor 220, as described with reference to FIGS. 4A to 4C. The sludge biologically treats contaminants in sewage and is granulated while growing. The control unit (not shown) checks whether the sludge grows into granules. The control unit (not shown) checks whether the size and settling properties of the sludge in the sample collected in the reactor 220 satisfies preset criteria. As criteria, the granule may have a size of 0.2 mm or more and a SVI₅ of 60 mL/g or less. The control unit (not shown) operates the acceleration reactor 220 until the sludge satisfies the criteria of granules.

In order to satisfy the criteria, the production of granules (sludge granulation) conventionally takes at least 3 months in the reactor, whereas the apparatus for accelerating sludge granulation 140 may produce granules in about 1 month.

As described above, the control unit (not shown) adjusts information on the granulation of activated sludge in the acceleration reactor depending on the degree to which the activated sludge is granulated or the amount of nutrients in the introduced sewage. In some cases, the control unit (not shown) may cause the activated sludge to be completely formed into granules and then returned to the bioreactor 120, or may cause the activated sludge to be granulated to an appropriate level and then returned to the bioreactor 120.

Referring to FIG. 2B, it may include only the acceleration reactor 220 and the control unit (not shown), excluding the cultivation tank 210.

Without the cultivation tank 210, the acceleration reactor 220 may perform the operation of the cultivation tank 210. The acceleration reactor 220 is first injected with sludge and a carbon source, and may create an anaerobic environment. The extracellular polymeric substances of microorganisms are released from the acceleration reactor 220 in which an anaerobic environment is created. The acceleration reactor 220 creates an anaerobic environment and exposes sludge for 3 to 5 days to release extracellular polymeric substances. Then, under the control of a control unit (not shown), the acceleration reactor 220 receives sewage from the outside to grow and granulate the sludge as described with reference to FIG. 3.

Accordingly, although the acceleration reactor 220 is somewhat more complex in operation or treatment, it is possible to reduce the space for the apparatus for accelerating sludge granulation 140 since it is not necessary to ensure the cultivation tank 210.

FIG. 7 is a flowchart illustrating a method of accelerating granulation of activated sludge by the apparatus for accelerating sludge granulation according to the embodiment of the present disclosure.

The cultivation tank 210 or the acceleration reactor 220 receives activated sludge and a carbon source to culture them in a preset environment for a preset time (S710) . The cultivation tank 210 or the acceleration reactor 220 receives activated sludge and a carbon source, and cultures the activated sludge in an anaerobic environment for about 3 to 5 days. Accordingly, extracellular polymeric substances are released from the activated sludge.

The acceleration reactor 220 receives sewage from the outside to aerate the cultured activated sludge for a first preset time (S720). The acceleration reactor 220 receives the cultured activated sludge and receives sewage from the outside for about an hour to grow the activated sludge. The acceleration reactor 220 aerates the introduced activated sludge and sewage for the first preset time to apply shear force at the same time as the growth of the activated sludge. The acceleration reactor 220 may perform an aeration process for about 2 to 4 hours.

The acceleration reactor 220 settles the sludge for a second preset time (S730).

The acceleration reactor 220 is rested for a third preset time (S740). The acceleration reactor 220 repeats the processes of S720 to S740 except for the inflow of activated sludge until the activated sludge is granulated and formed into granules.

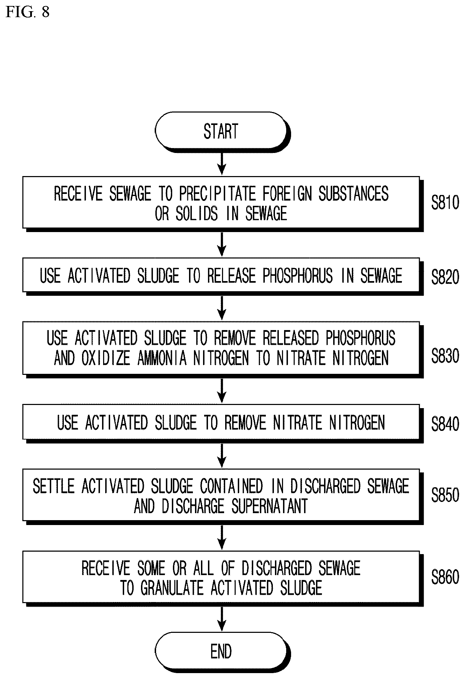

FIG. 8 is a flowchart illustrating a method of treating nutrients in sewage by the sewage treatment system according to the embodiment of the present disclosure.

The sedimentation tank 110 receives sewage and settles impurities or solids in the sewage (S810).

The bioreactor 120 uses activated sludge to release phosphorus in sewage (S820).

The bioreactor 120 uses activated sludge to remove the released phosphorus and oxidizes ammonia nitrogen to nitrate nitrogen (S830).

The bioreactor 120 uses activated sludge to remove nitrate nitrogen through denitrification (S840).

The secondary sedimentation tank 130 settles the activated sludge contained in the discharged sewage and discharges supernatant (S850).

The apparatus for accelerating sludge granulation 140 receives some or all of the discharged sewage to granulate activated sludge (S860).

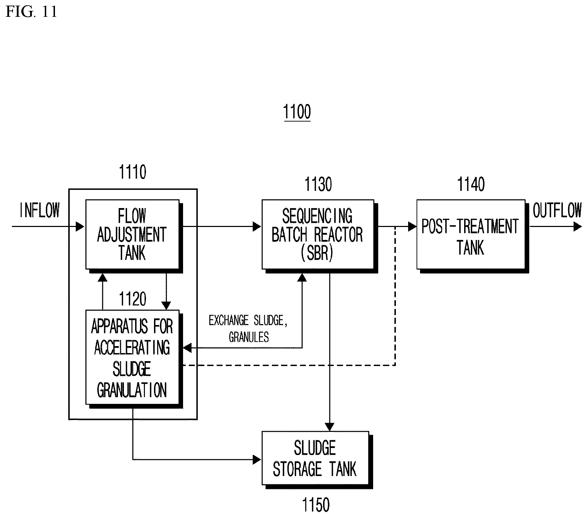

FIG. 11 is a block diagram illustrating a configuration of a sewage treatment system according to a second embodiment of the present disclosure.

Referring to FIG. 11, the sewage treatment system, which is designated by reference numeral 1100, according to the second embodiment of the present disclosure includes a flow adjustment tank 1110, an apparatus for accelerating sludge granulation 1120, a sequencing batch reactor (SBR) 1130, a post-treatment tank 1140, a sludge storage tank 1150, and a control unit (not shown).

Like the sewage treatment system 100, the sewage treatment system 1100 uses activated sludge or granules to remove contaminants in sewage, for example, nutrients such as nitrogen or phosphorus. However, the sewage treatment system 1100 includes the SBR 1130, instead of the bioreactor 120.

The flow adjustment tank 1110 stores sewage from the outside, delivers a preset amount of the stored sewage to the SBR 1130 at preset time intervals, and allows microorganisms to discharge phosphorus into sewage.

The flow adjustment tank 1110 stores sewage introduced from the outside and releases a certain amount of sewage into the SBR 1130 at regular intervals. The SBR 1130 has a fixed amount of sewage that is treatable, and takes a certain amount of time to treat a certain amount of sewage, rather than treatment in real time at the same time as inflow. Hence, the produced sewage should not immediately flow into the SBR 1130. In addition, the sewage that is produced varies from time to time, so that at some times a large amount of sewage is produced, while at other times only a very small amount of sewage is produced. In order for the SBR 1130 to be operatable normally in such a situation, the flow adjustment tank 1110 serves as a buffer for the SBR 1130 by receiving and storing all of the sewage produced at front of the SBR 1130, and releases a preset amount of sewage into the SBR 1130 at preset time intervals. Sewage with various composition ratios flows into the flow adjustment tank 1110 from various places such as homes, livestock farms, or industrial sites. For example, the sewage from homes or industrial sites contains relatively low concentrations of nitrogen and organic matter, while the sewage from livestock farms contains higher concentrations of nitrogen and organic matter.

The SBR 1130 removes nitrogen, phosphorus, and organic matter in the sewage introduced from the flow adjustment tank 1110.

The SBR 1130 regulates the supply of oxygen under the control of the control unit (not shown) to remove nitrogen in the sewage introduced from the flow adjustment tank 1110. The SBR 1130 stirs sewage under aerobic conditions, allowing activated sludge (nitrifying microorganisms) in the sewage to oxidize ammonia nitrogen to nitrate nitrogen. The SBR 1130 stirs sewage under anoxic conditions with the supply of air stopped, allowing activated sludge (denitrifying microorganisms) to remove nitrate nitrogen in the sewage.

The activated sludge (phosphorus-removing microorganisms) releases phosphorus by going through the flow adjustment tank 1110, to thereby have a state in which organic matter may be accumulated in the cell. Under aerobic conditions in the SBR 1130, the activated sludge then absorbs phosphorus present in sewage to accumulate energy by converting ADP into ATP. In this case, since the activated sludge accumulates a much larger amount of phosphorus in the aerobic environment of the SBR 1130 than the amount released in the anaerobic environment of the flow adjustment tank, the phosphorus in sewage may be removed as a whole.

The SBR 1130 goes through stirring and air supply processes under the control of the control unit, and then goes through a precipitation process to precipitate activated sludge accumulating phosphorus. The SBR 1130 goes through a precipitation process to discharge the precipitated microorganisms, and discharges supernatant to the post-treatment tank 1140.

The SBR 1130 may include a sensor therein to observe and record a level of water, dissolved oxygen (DO), a concentration of mixed liquor suspended solids (MLSS), or the like. The SBR 1130 senses information on the level of water, the dissolved oxygen, or the concentration of mixed liquor suspended solids to transmit it to the control unit (not shown). The control unit (not shown) may determine the level of water and current state in the SBR 1130 based on the values observed by the sensors in the SBR 1130 and control the operation of the SBR 1130.

The SBR 1130 may perform the above-mentioned operations and replace the bioreactor 120.

The post-treatment tank 1140 performs post-treatment on the supernatant discharged from the SBR 1130 or the treated water treated in the apparatus for accelerating sludge granulation 1120. The apparatus for accelerating sludge granulation 1120 or the SBR 1130 may not remove all amounts of organic matter present in sewage. In order to prevent this, the post-treatment tank 1140 performs a necessary post-treatment process depending on the state of supernatant, such as a process of removing organic matter contained in the treated water treated in the apparatus for accelerating sludge granulation 1120 or the supernatant discharged from the SBR 1130, or a process of removing ammonia nitrogen or nitrate nitrogen, and then discharges it to the outside.

The sludge storage tank 1150 stores activated sludge or granules in case the activated sludge or granules may not be transported in time.

However, microorganisms need to be settled in order to complete the operation in each of the components 1120 to 1150. If the microorganisms (activated sludge) are granulated or formed into granules, the sedimentation time may increase dramatically, leading to a significant reduction in the time for treatment. For this purpose, the sewage treatment system 1100 further includes the apparatus for accelerating sludge granulation 1120.

The apparatus for accelerating sludge granulation 1120 may be implemented in the same space as or in close proximity to the flow adjustment tank 1110, and receives some or all of the sewage introduced into the flow adjustment tank 1110 from the flow adjustment tank 1110 to accelerate the granulation of activated sludge.

The apparatus for accelerating sludge granulation 1120 may be implemented in the same space as the flow adjustment tank 1110. When the apparatus for accelerating sludge granulation 1120 is implemented in the same space as the flow adjustment tank 1110, it is possible to increase convenience in management of the apparatus for accelerating sludge granulation since it is maintained and repaired together with the flow adjustment tank 1110. In addition, it is possible to minimize a change in water temperature since the exposure of the apparatus for accelerating sludge granulation 1120 to an external environment is minimized. Therefore, it is possible to minimize the influence of water temperature on the granulation of activated sludge.

As described above, the flow adjustment tank 1110 stores the introduced sewage unless it releases the sewage to the SBR 1130. Accordingly, the apparatus for accelerating sludge granulation 1120 receives the sewage stored in the flow adjustment tank 1110 from the flow adjustment tank 1110. The apparatus for accelerating sludge granulation 1120 may accelerate the granulation of activated sludge by creating a preset environment to induce the release of extracellular polymeric substances (EPS) from the activated sludge (microorganisms) and continuously applying shear force at the same time as the growth of microorganisms.

The apparatus for accelerating sludge granulation 1120 may return sewage in which activated sludge is granulated back to the flow adjustment tank 1110, allowing the reaction to proceed in the SBR 1130 by the granulated activated sludge or activated sludge granules. Since the reaction proceeds by the granulated activated sludge or activated sludge granules, the sedimentation rate of the activated sludge after the reaction may significantly increase compared to the conventional method. In addition, the apparatus for accelerating sludge granulation 1120 may reduce the time taken to granulate activated sludge to 1/3 or less of the time consumed in the conventional process of activated sludge granulation.

However, the present disclosure is not necessarily limited thereto. For example, the apparatus for accelerating sludge granulation 1120 may exchange activated sludge or granules directly with the SBR 1130, in addition to return of sewage in which activated sludge is granulated back to the flow adjustment tank 1110. The apparatus for accelerating sludge granulation 1120 may receive the settled activated sludge from the sedimentation process of the SBR 1130 from the SBR 1130, and granulate the activated sludge to provide it back to the SBR 1130. Since the same or similar sewage treatment process as that of the SBR 1130 is carried out even in the process of activated sludge granulation of the apparatus for accelerating sludge granulation 1120, the apparatus for accelerating sludge granulation 1120 may release the granulated sludge directly into the SBR 1130 and the treated water directly into the post-treatment tank 1140. Since the apparatus for accelerating sludge granulation 1120 performs the same operation as the apparatus for accelerating sludge granulation 140, a detailed description thereof is omitted.

While the exemplary embodiments have been described with reference to the accompanying drawings, it is to be understood by those skilled in the art that various modifications and changes in form and details can be made therein without departing from the spirit and scope as defined by the appended claims. Accordingly, the embodiments disclosed herein are intended to illustrate, rather than to limit, the technical ideas of the present disclosure, and it is therefore obvious that the scope of the technical ideas of the present disclosure is not limited by these embodiments. Various modifications and specific embodiments that can be easily inferred by those skilled in the art within the scope of the technical ideas included in the specification and drawings of the present disclosure should be interpreted as falling within the scope of the present disclosure.

## Claims

1. An apparatus for accelerating sludge granulation, which serves to accelerate a process of granulating activated sludge to produce granules, the apparatus comprising:
a cultivation tank configured to receive activated sludge and a carbon source to culture them in a preset environment for a preset time;
an acceleration reactor configured to receive the activated sludge cultured in the cultivation tank and sewage from the outside to grow and granulate the activated sludge; and
a control unit configured to control operations of the cultivation tank and the acceleration reactor.

2. The apparatus according to claim 1, wherein the preset environment is an anaerobic environment.

3. The apparatus according to claim 1, wherein the preset time is 3 to 5 days.

4. The apparatus according to claim 1, wherein the acceleration reactor comprises:
an inflow port for receiving the activated sludge cultured in the cultivation tank and the sewage from the outside;
an aeration part configured to stir the introduced activated sludge and sewage;
a shear force formation part configured to generate shear force in the activated sludge stirred by the aeration part; and
an outflow port for discharging supernatant after the reaction in the acceleration reactor is completed.

5. The apparatus according to claim 4, wherein the shear force formation part comprises an inlet formed at the bottom thereof for introducing air supplied from the aeration part thereinto, a release port formed at one point thereof for releasing the stirred activated sludge from the inside to the outside thereof, and an outlet formed at the top thereof for discharging the stirred activated sludge to the outside.

6. The apparatus according to claim 4, wherein the control unit controls the acceleration reactor to receive the sewage for a first preset time to aerate it for a second preset time, to settle the sludge for a third preset time, and to rest for a fourth preset time.

7. The apparatus according to claim 6, wherein the control unit controls the acceleration reactor to operate repeatedly in a cycle.

8. An apparatus for accelerating sludge granulation, which serves to accelerate a process of granulating activated sludge to produce granules, the apparatus comprising:
an acceleration reactor configured to receive activated sludge and a carbon source to culture them in a preset environment for a preset time and to receive sewage from the outside to grow and granulate the cultured activated sludge; and
a control unit configured to control an operation of the acceleration reactor.

9. The apparatus according to claim 8, wherein the control unit operates the acceleration reactor until the sludge is formed into granules.

10. The apparatus according to claim 9, wherein the control unit determines whether the sludge is formed into the granules based on whether the sludge satisfies preset criteria in size and sedimentation.

11. A method of accelerating a process of granulating activated sludge to produce granules by an apparatus for accelerating sludge granulation, the method comprising:
a culture process of receiving activated sludge and a carbon source to culture them in a preset environment for a preset time;
an aeration process of receiving sewage from the outside to aerate the activated sludge cultured in the culture process for a first preset time;
a sedimentation process of settling the sludge for a second preset time; and
a resting process of pausing for a third preset time.
